# EUROPEAN PATENT APPLICATION

(11) **EP 4 350 851 A1**
(43) Date of publication of application: **10.04.2024**
(21) Application number: 22811464.1
(22) Date of filing: 30.03.2022
(51) Int. Cl.: H01M 50/167, H01M 50/186, H01M 50/152, H01M 50/179

(54) **CYLINDRICAL SECONDARY BATTERY**

(30) Priority: 27.05.2021 KR 20210068459
(71) Applicant: Samsung SDI Co., Ltd., Yongin-si, Gyeonggi-do 17084 (KR)
(72) Inventor: JUNG, Hyun Ki, Yongin-si, Gyeonggi-do 17084 (KR); LEE, Won Sug, Yongin-si, Gyeonggi-do 17084 (KR)
(74) Representative: Marks & Clerk LLP
(86) International application number: PCT/KR2022/004496
(87) International publication number: WO 2022/250270

(57) **Abstract**

An embodiment of the present invention relates to a cylindrical secondary battery comprising: a cylindrical can having a bottom surface and a side portion extending from the bottom surface, one end of the side portion being open to form an opening; an electrode assembly accommodated in the can; and a cap assembly including a gasket which is inserted into the can with the electrode assembly inserted in the can to come into contact with the electrode assembly, and a cap plate which is disposed on the gasket and is electrically connected to the electrode assembly, wherein the can has, at the edge of the opening, a curling portion which presses the gasket to bring the gasket into contact with the cap plate.

## Description

### TECHNICAL FIELD

An embodiment of the present invention relates to a cylindrical secondary battery having an improved structure capable of enhancing reliability and stability and increasing battery capacity.

### BACKGROUND ART

In general, a cylindrical secondary battery includes a cylindrical electrode assembly, a cylindrical can accommodating the electrode assembly and electrolyte, and a cap assembly coupled to an upper opening of the can to seal the can and allow current generated in the electrode assembly to flow to an external device. The cap assembly is disposed between a crimping part that inwardly bends the end of the can and a beading part that deforms a part of the can so as to be inwardly recessed, and is fixed to the can.

However, in order to form a beading part, there is a problem of limiting the total height of the electrode assembly. In addition, the beading part is a portion that has been deformed once, and thus is vulnerable to heat during thermal runaway, lowering the safety of secondary battery.

Recently, in order to increase the capacity of secondary battery, there is a trend in which the thickness of the cap assembly is gradually reduced. Accordingly, in a process of forming a crimping part that inwardly bends an end of a can, deformation in which the cap assembly (particularly, a bent part) is bent may occur due to pressure. Since processes for forming the crimping part increases as the diameter of the secondary battery increases, the risk of deformation of the cap assembly may also increase.

The above information disclosed in this Background section is only for enhancement of understanding of the background of the invention and therefore it may contain information that does not constitute prior art.

### DESCRIPTION OF EMBODIMENTS

### TECHNICAL PROBLEM

An object of the present invention is to provide a cylindrical secondary battery capable of effectively sealing a can in a structure in which crimping is not achieved by deleting a beading part, in order to increase battery capacity by increasing the total height of an electrode assembly.

### SOLUTION TO PROBLEM

A cylindrical secondary battery according to an embodiment of the present invention may include: a cylindrical can having a bottom surface and a side portion extending from the bottom surface, one end of the side portion being open to form an opening; an electrode assembly accommodated in the can; and a cap assembly including a gasket which is inserted into the can with the electrode assembly inserted in the can to come into contact with the electrode assembly, and a cap plate which is disposed on the gasket and is electrically connected to the electrode assembly, wherein the can has, at the edge of the opening, a curling portion which presses the gasket to bring the gasket into contact with the cap plate.

The gasket may include a disk-shaped bottom surface and a side surface extending in a cylindrical shape from the bottom surface, and a through hole is formed in the bottom surface.

The curling portion may be bent toward the winding center of the electrode assembly from the side portion.

A side length of the gasket in contact with the cap plate may be larger than a radial width of the curling portion.

The cylindrical secondary battery may include an uncoated portion provided at one end of the electrode assembly, a current collector plate electrically connected to the uncoated portion, and an electrode tab electrically connected to the current collector plate, wherein the current collector plate or the electrode tab may be exposed through the through hole.

The cylindrical secondary battery may include an uncoated portion provided at one end of the electrode assembly and a current collector plate electrically connected to the uncoated portion, wherein the current collector plate is exposed through the through hole.

The cap plate may be electrically connected to the current collector plate or the electrode tab through the through hole of the gasket.

The can may further include at least one groove concavely formed toward a winding center of the electrode assembly on the side portion adjacent to the curling portion.

The groove may be formed at a position corresponding to the gasket.

The groove may be formed in a ring shape along the circumference of the side portion.

The can may further include a stepped portion protruding from an inner circumferential surface of the side portion adjacent to the opening.

### ADVANTAGEOUS EFFECTS OF DISCLOSURE

According to the present invention, by deleting a beading part, a total height of an electrode assembly may be increased, and thus battery capacity may be increased and performance may be improved, thereby providing a structure with a crimping part deleted therefrom. Accordingly, by supporting a part in a state in which the gasket is in contact with the current collector plate, there is an effect of minimizing the risk of deformation of the part. In addition, by forming a groove on a side surface of the gasket, there is an effect of improving the sealing force of the secondary battery.

### BRIEF DESCRIPTION OF DRAWINGS

FIG. 1 is a combined perspective view showing a cylindrical secondary battery according to an embodiment of the present invention.
FIG. 2 is an exploded perspective view of the cylindrical secondary battery according to FIG. 1.
FIG. 3A is a perspective view illustrating a state before inserting a cap plate of the cylindrical secondary battery according to FIG. 2.
FIG. 3B is a perspective view illustrating the cylindrical secondary battery of FIG. 3A after a cap plate is inserted.
FIG. 3C is a perspective view illustrating the cylindrical secondary battery of FIG. 3B after can processing.
FIG. 4 is a partial longitudinal cross-sectional view illustrating the cylindrical secondary battery according to FIG. 1.
FIG. 5 is an enlarged view of a main portion according to FIG. 4.
FIG. 6A is an enlarged view of a main portion of a cylindrical secondary battery according to another embodiment of the present invention.
FIG. 6B is a schematic diagram briefly showing a method for manufacturing the main portion according to FIG. 6A.
FIGS. 7 and 8 are enlarged views of main portions of a cylindrical secondary battery according to other embodiments of the present invention.

### BEST MODE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a cylindrical secondary battery according to an embodiment of the present invention will be described in detail with reference to the accompanying drawings.

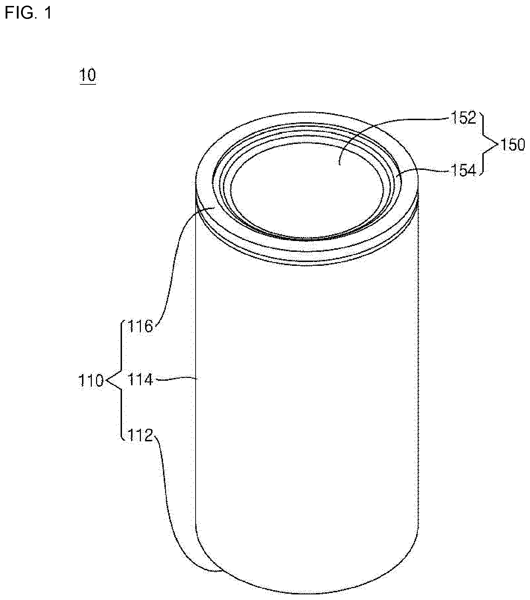

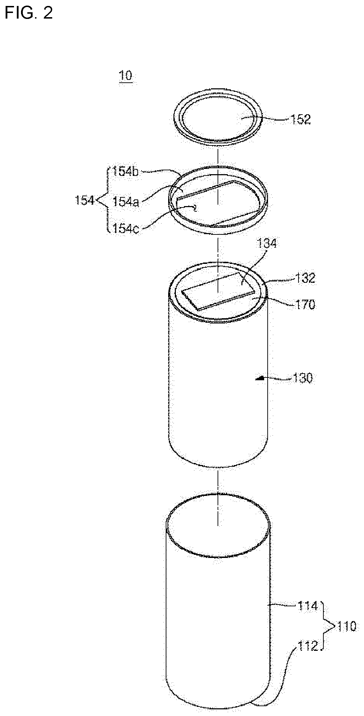

FIG. 1 is a combined perspective view showing a cylindrical secondary battery according to an embodiment of the present invention. FIG. 2 is an exploded perspective view of the cylindrical secondary battery according to FIG. 1.

As shown in FIGS. 1 and 2, a cylindrical secondary battery 10 according to an embodiment of the present invention may include a cylindrical can 110, an electrode assembly 130 inserted into the can 110, and a cap assembly 150 inserted into one end of the can 110 (In the present invention, main embodiments pertain to a structure and method for deleting a beading part and a crimping part and fixing a cap assembly to a can. Therefore, structures other than the main embodiment of the present invention, like a specific structure of a cap assembly, such as a vent, or a specific structure of an electrode assembly, will be briefly described or detailed descriptions thereof will be omitted.).

The can 100 includes a circular bottom portion 110 and a side portion 114 extending upward from the bottom portion 110, and the top portion of the side portion 114 is open (hereinafter referred to as an opening). In the manufacturing process of the secondary battery 10, the electrode assembly 130 is inserted into the can 110 together with an electrolyte through the opening of the can 110. The can 110 may be made of steel, a steel alloy, nickel-plated steel, a nickel-plated steel alloy, aluminum, an aluminum alloy, or an equivalent thereof, but the material is not limited thereto. The cap assembly 150 is inserted into the opening of the can 110. A stepped portion 114a is formed on the side portion 114 for seating of the cap assembly 150.

The stepped portion 114a is formed on the inner circumferential surface of the side portion 114 adjacent to the opening and may protrude toward the winding center of the electrode assembly 130. In the stepped portion 114a, a plurality of protrusions may be formed at regular intervals, or may protrude in a ring shape along the inner circumferential surface of the side portion 114. The cap assembly 150 is seated on the stepped portion 114a to then be primarily supported, and a gasket 154 to be described later come into contact with the current collector plate 170 to then be secondarily supported, thereby allowing the cap assembly 150 to be stably supported.

Although not shown in the drawing, the size of the area where the stepped portion 114a is formed may be increased by increasing the diameter of the end of the can 110, and a ring-shaped gasket without a bottom surface may be applied.

The electrode assembly 130 includes a negative electrode plate coated with a negative electrode active material (e.g., graphite, carbon, etc.), a positive electrode plate coated with a positive electrode active material (e.g., a transition metal oxide (LiCoO2, LiNiO2, LiMn2O4, etc.), and a separator disposed between the negative electrode plate and the positive electrode plate to prevent a short circuit and to allow only the movement of lithium ions. The negative electrode plate, the positive electrode plate, and the separator may be wound in a substantially cylindrical shape and accommodated in the can 110. A negative electrode uncoated portion not coated with the negative electrode active material may be formed on the negative electrode plate, and a positive electrode uncoated portion not coated with the positive electrode active material may be formed on the positive electrode plate. In the present invention, the positive electrode uncoated portion 132 may be disposed toward, for example, the upper side of FIG. 2. Conversely, the negative electrode uncoated portion may be disposed toward, for example, the lower side of FIG. 2. Alternatively, although not shown in the drawing, a negative electrode uncoated portion may be disposed toward the upper side, a current collector plate, a can, and a cap assembly may be all electrically connected, and a positive electrode uncoated portion may be disposed toward the lower side (In this case, the positive electrode current collector plate and the positive electrode uncoated portion may come into contact with each other, an insulator may be provided between the positive electrode current collector plate and the bottom portion of the can, and a terminal, in which the positive electrode current collector plate is connected to the outside through the bottom portion of the can, may be formed.). For convenience, in the drawing of the present invention, only the positive electrode uncoated portion 132 is shown and described.

A current collector plate 170 may be welded on the positive electrode uncoated portion 132 to be electrically connected to the positive electrode uncoated portion 132. A diameter of the current collector plate 170 may be slightly smaller than a diameter of the electrode assembly 130. On the current collector plate 170, the positive electrode tab 134 may be electrically and physically connected. That is, the positive electrode tab 134 may be electrically connected to the positive electrode uncoated portion 132 through the current collector plate 170. Alternatively, after the positive electrode tab is welded to the positive electrode uncoated portion, the positive electrode tab and the current collector plate are welded to electrically connect the positive electrode uncoated portion and the current collector plate. It is specified that the connection structure of the current collector plate 170 and the positive electrode tab 134 shown in the drawing of the present invention is an exemplary structure. The positive electrode tab 134 may be electrically connected to a cap plate 152 of the cap assembly 150.

As shown in FIGS. 1 and 2, the cap assembly 150 may include the cap plate 152 electrically connected to the current collector plate 170 and a gasket 154 for insulation or sealing.

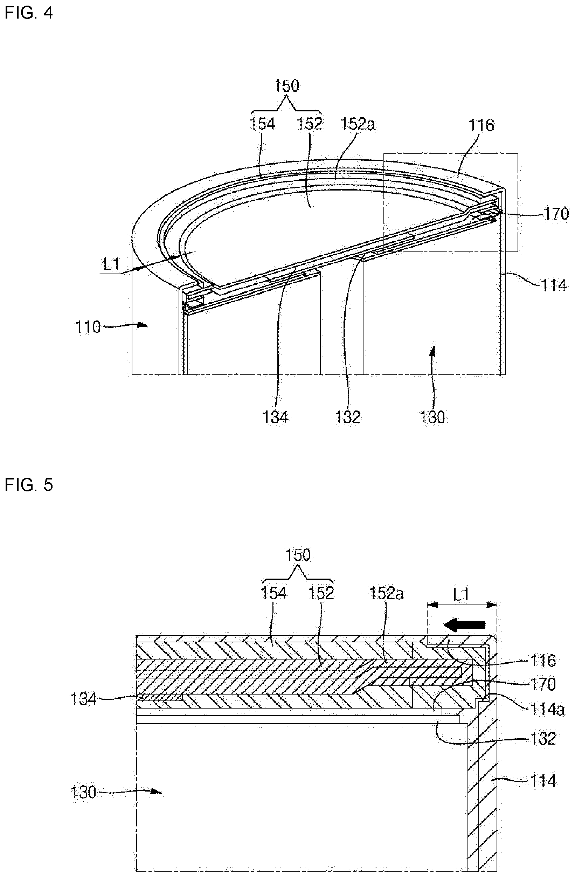

The cap plate 152 is disposed on the gasket 154 in a state in which the gasket 154 is disposed on the current collector plate 170. The gasket 154 and the top end of the can 110 are deformed together to cover the edge of the cap plate 152, and thus the cap plate 152 is fixed to the can 110 (which will be described later). Although not shown in the drawing, a notch may be formed in the cap plate 152 to function as a vent that is broken when internal pressure is generated. Alternatively, the cap plate 152 may have a CID function of blocking a current path due to deformation by the internal pressure, or may have a fuse function of blocking a current path by including a part that melts at high heat. The cap plate 152 has a substantially disc shape and should be able to contact the current collector plate 170 or the positive electrode tab 134 while being disposed on the gasket 154. Therefore, when viewed from the same line, the plate surface at the center is formed lower than the edge fixed to the gasket 154 (When there is no positive electrode tab, the center of the cap plate is formed to be low enough to be in direct contact with the current collector plate). That is, the cap plate 152 may have a disk shape in which the edge is lifted upward (see FIG. 4). Conversely, the current collector plate 170 may protrude upward to have a structure protruding together with the cap plate 152. An edge of the cap plate 152 fixed by the gasket 154 and the can 110 is defined as a gasket coupling portion 152a. Accordingly, the cap plate 152 may have a disk-shaped plate surface and the gasket coupling portion 152a extending upward from the plate surface, on the basis of FIG. 2.

As shown in FIG. 2, the gasket 154 may include a substantially disk-shaped bottom surface 154a and a side surface 154b extending upward from the bottom surface 154a in a cylindrical shape. A through hole 154c is formed through the bottom surface 154a of the gasket 154. The gasket 154 may be made of any one of various insulating materials having elasticity, such as rubber or silicon. The electrode assembly 130 and the can 110 may be insulated from each other by using the gasket 154 integrated into an upper insulating plate without a separate upper insulating plate (the gasket serving as the upper insulating plate).

The bottom surface 154a may have a larger diameter than the current collector plate 170 so as to prevent the positive electrode uncoated portion 132 from contacting the cap plate 152. However, since the gasket 154 needs to be inserted into the can 110, the bottom surface 154a may have a diameter smaller than or equal to the diameter of the electrode assembly 130. Alternatively, the bottom surface 154a of the gasket 154 may be formed to have a larger diameter than the electrode assembly 130, and the gasket 154 may be inserted into the can 110 in an interference-fit manner. All portions of the bottom surface 154a, except for the through hole 154c, may come into contact with the positive electrode tab 134 and/or the current collector plate 170. Accordingly, the deformation of the cap assembly 150 can be minimized because the support area of the gasket 154 is increased compared to the existing structure that supports only the edge of the cap plate.

The side surface 154b extends upward from the bottom surface 154a and is inwardly deformed along with the can 110 to cover the edge of the cap plate 152. Therefore, a height (a vertical length ranging from the bottom surface to the top end of the side surface) of the side surface 154b may be larger than a distance from the top end of the electrode assembly 130 to the top-end edge of the can 110 in a state in which the electrode assembly 130 is inserted into the can 110. That is, when viewed from the outside of the can 110, the gasket 154 may be shaped such that the side surface 154b is higher than the top end of the can 110. The reason why the gasket 154 has such a shape will be described later.

The through hole 154c is formed through the bottom surface 154a to a size that allows at least a portion of the positive electrode tab 134 to be exposed. The cap plate 152 may be in contact with and electrically connected to the positive electrode tab 134 through the through hole 154c. Alternatively, depending on the shape and arrangement of the positive electrode tab 134, the cap plate 152 and the current collector plate 170 may be in direct contact with each other through the through hole 154c.

In the cylindrical secondary battery having the aforementioned configuration according to an embodiment of the present invention, a process of fixing the cap assembly to the can will be described below.

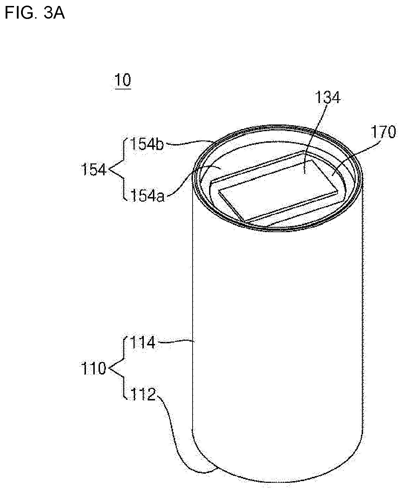

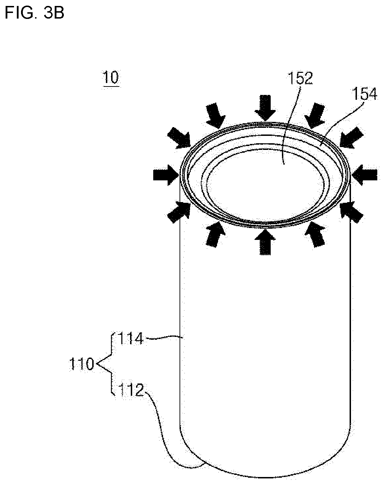

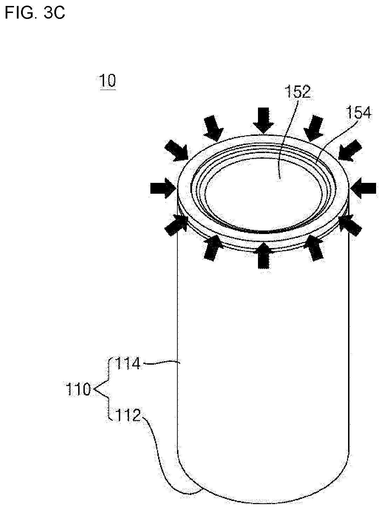

FIG. 3A is a perspective view illustrating a state before inserting a cap plate of the cylindrical secondary battery according to FIG. 2. FIG. 3B is a perspective view illustrating the cylindrical secondary battery of FIG. 3A after a cap plate is inserted. FIG. 3C is a perspective view illustrating the cylindrical secondary battery of FIG. 3B after can processing. FIG. 4 is a partial longitudinal cross-sectional view illustrating the cylindrical secondary battery according to FIG. 1. FIG. 5 is an enlarged view of a main portion according to FIG. 4.

As shown in FIG. 3A, in a state in which the electrode assembly 130 is inserted into the can 110, the gasket 154 is first placed on the electrode assembly 130. Here, the gasket 154 is in a state of being inserted into the can 110, but the side surface 154b is higher than the top end of the can 110 to protrudes upward from the can 110. Since the through hole 154c is formed in the gasket 154, the positive electrode tab 134 and a portion of the current collector plate 170 are exposed through the through hole 154c. Depending on the shape of the through hole 154c, a portion of the positive electrode tab 134 may also be exposed.

Thereafter, as shown in FIG. 3B, the cap plate 152 is placed on the gasket 154. Then, as indicated by the arrows, the top end of the can 110 is inwardly deformed from the outside (in the direction toward the winding center of the electrode assembly). Here, as shown in FIG. 3C, the gasket 154 is deformed along with deformation of the can 110 and is folded together with the can 110. Accordingly, the side surface 154b of the gasket 154 comes into close contact with the gasket coupling portion 152a of the cap plate 152, and thus the gasket coupling portion 152a may be pressed and fixed by the side portion 154b of the gasket 154 and the top end of the side portion 114 of the can 110. That is, the cap plate 152 is fixed by the can 110 with the gasket 154 therebetween.

In order to fix the cap assembly 150 by the can 110 in this way, the top end of the can 110 needs to be folded and processed. A curling process may be applied as a processing method for inwardly deforming the top end of the can 110.

The curling process is a type of rotary forming in which the can 110 is deformed in a desired direction by applying force from one side or a top portion of the can 110 while continuously rotating the can 110. By using the curling process, the top end of the can 110 may be pushed inwardly (in the direction indicated by the arrow shown in FIG. 5) at least once or a plurality of times to be bent. The thus formed bent portion of the top end of the can 110 is defined as a curling portion 116.

As shown in FIGS. 4 and 5 when the curling portion 116 is formed in the can 110, the gasket coupling portion 152a, which is the edge of the cap plate 152, is covered by the bottom surface 154a of the gasket 154 and the bent side surface 154b. Since the side surface 154b of the gasket 154 is bent by the can 110 and deformed parallel to the bottom surface 154a, the gasket coupling portion 152a of the cap plate 152 is inserted between the bottom surface 154a of the gasket 154 and the bent side surface 154b. Accordingly, the cap plate 152 and the gasket 154 may be fixed to the can 110 without separate welding or beading and/or crimping parts. Here, the length of a contact portion between the side surface 154b of the gasket 154 and the gasket coupling portion 152a of the cap plate 152 (hereinafter referred to as a covering length of the gasket) is longer than the covering length of the can 110 (which may be defined as, on the basis of FIGS. 4 and 5, the length L1 ranging from the side portion 114 of the can 110 to the inner diameter portion of the curling portion 116, the width of the curling portion). That is, the folded side surface 154b of the gasket 154 protrudes more toward the winding center of the electrode assembly than the curling portion 116 of the can 110. This is because the height of the side portion 154b of the gasket 154 is greater than the height of the top end of the side portion 114 of the can 110 when the gasket 154 is inserted into the can 110. Since the covering length of the gasket 154 is greater than the covering length L1 of the can 110, insulation between the cap plate 152 and the can 110 is enabled (when the gasket does not need to perform an insulating function and performs only sealing, the height of the side portion of the gasket may be smaller than the height of the top end of the side portion of the can).

In addition, since the plate surface of the cap plate 152 is located below the gasket coupling portion 152a, the cap plate 152 may pass through the through hole 154c of the gasket 154 to come into contact with and be welded to the positive electrode tab 134. the cap plate 152 may come into direct contact with and be welded to the current collector plate 170, instead of the positive electrode tab, as necessary or according to the structure of current collector.

As described above, by deleting a beading part and supporting a part in a state in which a gasket is in contact with a current collector plate, there is an effect of minimizing the risk of deformation of the part. In addition, according to the present invention, by deleting a beading part, a total height of an electrode assembly may be increased, and thus battery capacity may be increased and performance may be improved. By deleting a beading part, a structure that is vulnerable to thermal runaway is improved, thereby improving the stability of secondary battery, and by preventing the possibility of electrolyte accumulation, the reliability of the secondary battery is improved.

Hereinafter, other embodiments of the present invention will be further described (detailed descriptions of the same features as those of the above-described embodiments will be omitted).

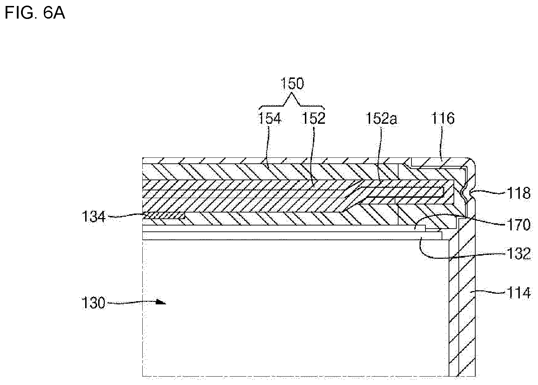

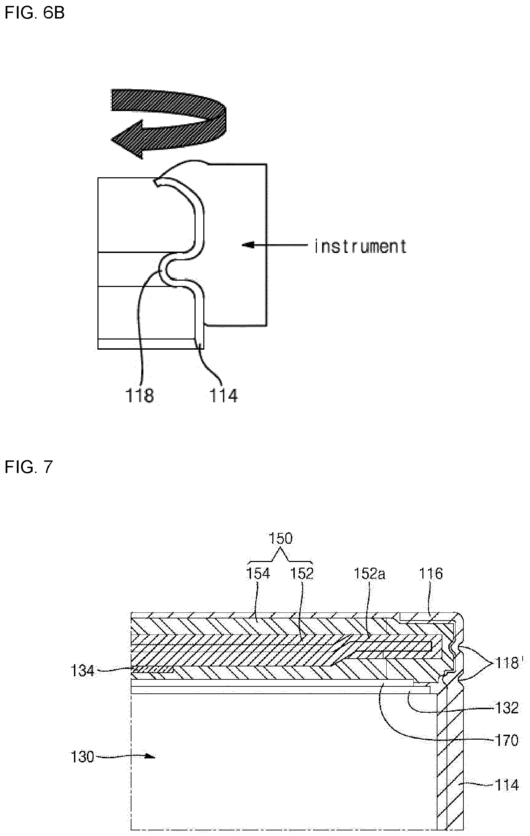

FIG. 6A is an enlarged view of a main portion of a cylindrical secondary battery according to another embodiment of the present invention. FIG. 6B is a schematic diagram briefly showing a method for manufacturing the main portion according to FIG. 6A.

As shown in FIG. 6A, the curling portion 116 is formed in the can 110, and at the same time a groove 118 may be additionally formed on the side portion 114 of the can 110 adjacent to the curling portion 116, thereby enhancing a sealing force of the gasket 154. As shown in FIG. 6B, the groove 118 may be formed at the same time as forming the curling portion 116 by using a separate instrument. When viewed from the outside of the can 110, the groove 118 is concavely formed by inwardly pressing the side portion 114 of the can 110 from the electrode assembly 130. That is, the groove 118 protrudes inward in a ring shape along the circumference of the side portion 114 of the can 110. The groove 118 serves to inwardly push and press the gasket 154 from the outside of the can 110 (toward the winding center of the electrode assembly), thereby improving the sealing force of the secondary battery 10 by the gasket 154. Accordingly, the groove 118 may be formed at a portion that comes into contact with the gasket 154.

In addition, the groove 118 may have a smaller depth than the covering length L1 of the can 110. That is, in the present invention, the groove 118 has a different structure from a beading part of a general cylindrical secondary battery, which is formed by greatly bending the can 110. If the beading part is generally formed to a height of several tens of millimeters (mm) (based on the longitudinal direction of the can), which may differ depending on the size of cylindrical battery, the groove 118 may have a height of, for example, several millimeters (mm). In addition, the beading part is a structure formed by pressing an empty space of a can, and thus the groove of the present invention differs therefrom with respect to being a structure formed by pressing the can together with a gasket. Therefore, the groove 118 of the present invention should be understood as a different structure from the beading part.

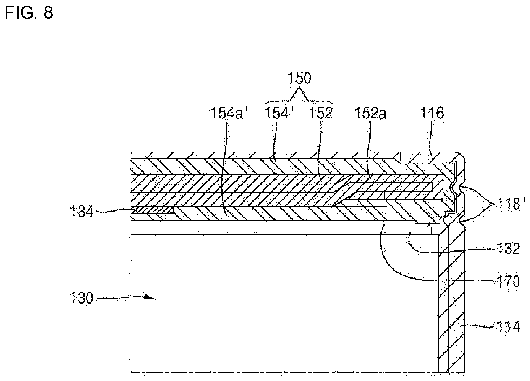

FIGS. 7 and 8 are enlarged views of main portions of a cylindrical secondary battery according to other embodiments of the present invention.

As shown in FIG. 7, a plurality of grooves 118' may be formed. Here, at least one groove 118' may be formed at a position at which the gasket 154 is pressed. Of course, all of the plurality of grooves 118' may be formed at positions at which the gasket 154 is pressed. Of course, all of the plurality of grooves 118' may be formed at positions at which the gasket 154 is pressed.

In addition, as necessary, an area where the bottom surface 154a supports the plate surface of the cap plate 152 may be increased by extending a portion of the bottom surface 154a of the gasket 154. In this case, an area for insulating and supporting is increased, and thus the deformation risk of the cap assembly 150 can be further reduced.

What has been described above is only one embodiment for carrying out the present invention, and the present invention is not limited to the above-described embodiment. However, the technical spirit of the present invention lies in that anyone skilled in the art could make various changes, as claimed in the claims below, without departing from the gist of the present invention.

## Claims

1. A secondary battery comprising:
a cylindrical can having a bottom surface and a side portion extending from the bottom surface, one end of the side portion being open to form an opening;
an electrode assembly accommodated in the can; and
a cap assembly including a gasket which is inserted into the can with the electrode assembly inserted in the can to come into contact with the electrode assembly, and a cap plate which is disposed on the gasket and is electrically connected to the electrode assembly,
wherein the can has, at the edge of the opening, a curling portion which presses the gasket to bring the gasket into contact with the cap plate.

2. The cylindrical secondary battery of claim 1, wherein the gasket includes a disk-shaped bottom surface and a side surface extending in a cylindrical shape from the bottom surface, and a through hole is formed in the bottom surface.

3. The cylindrical secondary battery of claim 2, wherein the curling portion may be bent toward the winding center of the electrode assembly from the side portion.

4. The cylindrical secondary battery of claim 3, wherein a side length of the gasket in contact with the cap plate is larger than a radial width of the curling portion.

5. The cylindrical secondary battery of claim 1, comprising an uncoated portion provided at one end of the electrode assembly, a current collector plate electrically connected to the uncoated portion, and an electrode tab electrically connected to the current collector plate, wherein the current collector plate or the electrode tab may be exposed through the through hole.

6. The cylindrical secondary battery of claim 1, comprising an uncoated portion provided at one end of the electrode assembly and a current collector plate electrically connected to the uncoated portion, wherein the current collector plate is exposed through the through hole.

7. The cylindrical secondary battery of claim 5 or 6, wherein the cap plate is electrically connected to the current collector plate or the electrode tab through the through hole of the gasket.

8. The cylindrical secondary battery of claim 4, wherein the can further includes at least one groove concavely formed toward a winding center of the electrode assembly on the side portion adjacent to the curling portion.

9. The cylindrical secondary battery of claim 8, wherein the groove is formed at a position corresponding to the gasket.

10. The cylindrical secondary battery of claim 8, wherein the groove is formed in a ring shape along the circumference of the side portion.

11. The cylindrical secondary battery of claim 1, wherein the can further includes a stepped portion protruding from an inner circumferential surface of the side portion adjacent to the opening.
